# EUROPEAN PATENT APPLICATION

(11) **EP 4 715 239 A1**
(43) Date of publication of application: **25.03.2026**
(21) Application number: 24201043.7
(22) Date of filing: 18.09.2024
(51) Int. Cl.: F16H 63/18, B60K 1/00, F16H 61/32, F16H 63/30

(54) **GEAR SHIFTING ARRANGEMENT VEHICLE DRIVING ASSEMBLY AND VEHICLE**

(71) Applicant: Traton AB, 151 87 Södertälje (SE)
(72) Inventor: BERGQUIST, Mikael, 141 69 Huddinge (SE)
(74) Representative: Traton AB

(57) **Abstract**

The disclosure concerns a gear shifting arrangement (8) for a gearbox. The arrangement (8) comprises a rotatable barrel cam (52) with a first track (60) and a shifting shaft (26) connected to the gearbox (14) and provided with a track follower (56) to follow along the first track (60). The first track (60) comprises a first inclined portion (601) configured to cause a first partial movement (PM1) of the shifting shaft (26) in a first axial direction (A1) from a neutral position (NP) to a first intermediate position (IP1) as the track follower (56) follows along the first inclined portion (601). A displacement mechanism (70) is configured to be activated at the first intermediate position (IP1) to cause a second partial movement (PM2) of the shifting shaft (26) in the first axial direction (A1) to a first gear engaging position (GP1).

## Description

### TECHNICAL FIELD

The invention relates to a gear shifting arrangement for a gearbox of a vehicle, to a vehicle driving assembly for a vehicle, and to a vehicle comprising a vehicle driving assembly.

### BACKGROUND

A gearbox forms part of a powertrain of a vehicle.

The gearbox is responsible for transferring torque from a vehicle propulsion power source to drive wheels of the vehicle. In the gearbox, different gears are shifted and engaged to provide different gear ratios.

Shifting gears in a gearbox may be performed by a shifting force applied manually by the driver or through actuators, such as a pneumatic, hydraulic, or electromagnetic actuators.

In recent years, there has been growing interest in the development of electric actuation systems for vehicle transmissions. Electric actuators offer several potential advantages over traditional pneumatic, hydraulic, and electromagnetic systems, including improved efficiency, reduced weight, and more precise control.

One kind of actuation system of a gearbox utilises a so-called barrel cam, also called shift drum. The barrel cam is rotatable by an electric motor and is provided with tracks. Track followers follow the tracks and cause gears to shift in the relevant gearbox.

Typically, in a gearbox, a so-called dog clutch is used for coupling a gearwheel to a shaft and thus, to engage the relevant gear. The dog clutch comprises two clutch halves, one connected to the gearwheel and one to the shaft. The two halves are arranged to be releasably coupled to each other by engagement of interlocking teeth.

The situation where the teeth of one half of a dog clutch align or line up perfectly with the teeth of the other half, preventing engagement, is often referred to as "tooth butt" or "tooth interference." In this situation, the teeth of the clutch halves face each other directly without meshing, which means the dog clutch, and the relevant gear, cannot engage.

In the context of an actuation system utilising a barrel cam, in situations with tooth interference in the gearbox, the electric motor is trying to rotate the barrel cam but rotation of the barrel cam is blocked. To finish the gear shift, once tooth interference stops, the electric motor will have to stay energized until there is relative motion between the dog clutch teeth of the two clutch halves to achieve a fully meshed engagement. This is undesirable because it will stall the electric motor, causing heat and waste electrical power.

US 2017/108119 discloses a shift-by-wire transmission system. The system includes a gearbox that is configured and arranged to receive a rotational input and provide a select rotational output. The gearbox includes a plurality of gear assemblies that are operationally coupled together to provide the select rotational output from the rotational input. A shift drum assembly is operationally coupled to the plurality of gear assemblies of the gearbox to selectively change gearing of the gearbox. An electric motor is operationally coupled to the shift drum assembly to activate the shift assembly to selectively change the gearing of the gearbox. The shift drum assembly includes a shift drum. Grooves are provided at the shift drum for moving respective forks and a collar to a desired location to change the gearing of the gearbox when the shift drum assembly is rotated. With respect to a park gear, a torsionally spring-loaded shift cam that is a separate piece from the shift drum is utilised to address the problem of the above discussed tooth interference situation. This allows the electric motor to rotate the shift drum to its target angular position and shut off. As soon as the vehicle rolls slightly, there is the required relative movement between the dog clutch halves for them, and the park gear, to engage.

### SUMMARY

It would be advantageous to achieve an actuation system for a gearbox that handles tooth interference situations in a gearbox. In particular, it would be desirable to unload a rotatable actuator of a barrel cam in a dog clutch tooth interference situation. To better address one or more of these concerns, one or more of a gear shifting arrangement, a vehicle driving assembly, and a vehicle having the features defined in one or more of the independent claims is provided.

According to an aspect, there is provided a gear shifting arrangement for a gearbox of a vehicle. The arrangement comprises a barrel cam having a rotational axis and being provided with at least a first track, an actuator operatively connected to the barrel cam for controlling a rotation of the barrel cam around the rotational axis, and at least one shifting shaft configured to be connected to a gear shifting mechanism of the gearbox and provided with a track follower configured to follow along the first track as the barrel cam is rotated around the rotational axis. The first track comprises a first inclined portion extending at an angle to a circumferential direction and being configured to cause a first partial movement of the shifting shaft in a first axial direction from a neutral position to a first intermediate position as the track follower of the shifting shaft follows along the first inclined portion. The arrangement further comprises at least one displacement mechanism configured to be activated at the first intermediate position of the shifting shaft to cause a second partial movement of the shifting shaft in the first axial direction to a first gear engaging position.

Since the first inclined portion of the first track is configured to cause the first partial movement of the shifting shaft in the first axial direction from the neutral position to the first intermediate position, as the track follower of the shifting shaft follows along the first inclined portion, and since the displacement mechanism is configured to be activated at the first intermediate position of the shifting shaft to cause the second partial movement of the shifting shaft in the first axial direction to the first gear engaging position - the movement of the shifting shaft to the first gear engaging position does not rely solely on the track follower of the shifting shaft following the first track for reaching the first gear engaging position. This means that the actuator is relieved of producing the required force during the entire shifting procedure when operating the gear shifting mechanism of the gearbox to shift gear therein. The actuator is only required to produce the force required for the first partial movement of the shifting shaft, from the neutral position to the first intermediate position. Specifically, in a tooth interference situation in the gearbox, the displacement mechanism ensures that the second partial movement of the shifting shaft in the first axial direction to the first gear engaging position is performed when tooth interference ceases, thus, unloading the actuator during the tooth interference situation.

According to a further aspect, there is provided a vehicle driving assembly for a vehicle, wherein the vehicle driving assembly is configured to support at least two drive wheels of the vehicle, wherein the vehicle driving assembly comprises an axle beam, two drive shafts arranged to drive the drive wheels, a gearbox, an electric machine configured to drive the two drive shafts via the gearbox, and a gear shifting arrangement according to any one of aspects and/or examples discussed herein.

Since the assembly comprises the gear shifting arrangement, as discussed above in the context of the gear shifting arrangement, the actuator of the gear shifting arrangement is unloaded during tooth interference situations in the gearbox.

According to a further aspect there is provided a vehicle comprising a vehicle driving assembly according to any one of aspects and/or examples discussed herein.

Since the vehicle comprises the vehicle driving assembly, as discussed above in the context of the gear shifting arrangement, the actuator of the gear shifting arrangement is unloaded during tooth interference situations in the gearbox.

The vehicle may be any vehicle configured for land-based propulsion and may comprise an electric machine configured to at least partially contribute to propelling the vehicle.

In the vehicle, the axle beam of the vehicle driving assembly may be connected to a chassis of the vehicle. Alternatively, the axle beam of the vehicle driving assembly may from part of a chassis of the vehicle.

The vehicle driving assembly may further comprise a differential arranged between the gearbox and the two drive shafts.

The at least two drive wheels may be supported at opposite lateral sides of the vehicle and at opposite ends of the axle beam. The two drive shafts arranged to drive the drive wheels may extend at least partially through the axle beam between the drive wheels and one of the gearbox or the differential.

The gearbox is arranged between the electric machine and the drive shafts, such as between the electric machine and a differential.

The gearbox may be a gearbox connected to any other propulsion power source of a land-based vehicle, such as to an internal combustion engine, ICE. Accordingly, according to alternative examples, the gearbox may form port of a different kind of powertrain than the herein discussed vehicle driving assembly.

The gearbox includes at least two gears that are shiftable by the gear shifting mechanism to provide different gear ratios between the electric machine and the drive wheels. The gearbox may comprise one or more of an input shaft, an output shaft, a main shaft, and/or a layshaft. Gearwheels arranged on these shafts are engageable in different ways for the gearbox to provide the different gear ratios.

The gear shifting mechanism of the gearbox may comprise a shifting fork or similar device.

The gearbox comprises at least one dog clutch arranged for engaging and disengaging a gearwheel with a shaft of the gearbox.

For each of one or more of the gearwheels a dog clutch is used for coupling the relevant gearwheel to the relevant shaft when a relevant gear is engaged. In a known manner, each dog clutch comprises two clutch halves, one connected to the gearwheel and one to the shaft. The two halves are arranged to be releasably coupled to each other by engagement of interlocking teeth.

The gear shifting mechanism may comprise at least one half of a dog clutch. The shifting fork or similar device, controlled by the shifting shaft of the gear shifting arrangement, may be configured to displace one half of the dog clutch axially along a shaft of the gearbox, such as along an output shaft or a main shaft.

The gearbox may be included in a transmission of the vehicle. Such a transmission may include further sections of gears beside the gearbox, e.g. the transmission may comprise a planetary gearset connected to the gearbox.

The electric machine is operable as an electric motor to drive the drive wheels of the vehicle. Optionally, the electric machine is operable as an electric generator e.g., for charging batteries aboard the vehicle.

The electric machine may be the only source of torque configured for propelling the vehicle. Alternatively, the electric machine may be complemented with further sources of torque arranged to propel the vehicle, such as one or more further electric machines and/or an ICE.

The barrel cam of the gear shifting arrangement may have a generally round shape, such as a cylindrical shape.

Rotation of the barrel cam around its rotational axis may be performed in various ways to achieve the engagement and disengagement of desired gears in the gearbox. For instance, the barrel cam may be rotated in both directions, the barrel cam may be rotated a portion of a full rotation, it may be rotated a full rotation, and/or it may be rotated more than a full rotation.

The first track may be provided in an outer surface of the barrel cam i.e., the first track may be formed by an at least partially circumferentially extending recesses in a body of the barrel cam.

The first inclined portion of the first track extending at an angle to a circumferential direction means that the inclined portion of the first track is inclined in relation to an imaginary plane extending perpendicularly to the rotational axis. Put differently, the circumferential direction extends along a plane extending perpendicularly to the rotational axis along a periphery of the barrel cam. As comparison, an inclined portion of the first track has a pitch, comparable to a portion of a thread of a screw.

One or more further portions of the first track may extend in parallel with the circumferential direction.

One or more further tracks may be provided in the outer surface of the barrel cam in a similar manner i.e., the further track/s may be formed by at least partially circumferentially extending recesses in the body of the barrel cam. Respective track followers of one or more further shifting shafts may follow along such one or more tracks.

During use of the gear shifting arrangement, the barrel cam is rotated about the rotational axis by the actuator. The actuator may be an electric actuator. The electric actuator may comprise an electric motor and a reduction gear. Other kinds of actuators to be utilised may be hydraulic, pneumatic, or manually operated actuators, which are configured for controlling a rotation of the barrel cam around the rotational axis.

The actuator is configured for precisely controlling the rotation of the barrel cam about the rotational axis. This means that partial and full rotations of the barrel cam, in both directions, can be achieved with angular precision to enable the track follower of the shifting shaft to follow the first track and optionally, to enable the track follower of any further shifting shaft to follow a respective track.

The shifting shaft forms part of a connection between the track follower following along the first track, herein also referred to as the first track follower, and the gearbox. The shifting shaft is arranged to shift a gearwheel of at least a first gear of the gearbox between a disengaged state when no torque is transferrable via the first gear and an engaged state when torque is transferrable via the first gear. Such shifting of at least the first gear involves the shifting shaft actuating the gear shifting mechanism of the gearbox.

The shifting shaft is linearly moved along an axial extension as the track follower of the shifting shaft follows along any inclined portion of the first track. Accordingly, an axial position of the shifting shaft is affected as the track follower of the shifting shaft follows along one or more portions of the first track, such as along the first inclined portion of the first track.

The first inclined portion of the first track may be provided by a portion of an edge of the first track. Similarly, any further inclined portions of the first track may be provided by respective edge portions of the first track. Namely, at inclined portions of a track, depending on the rotational direction of the barrel cam and the position of the shifting shaft, the track follower of the shifting shaft will primarily be pressed against one edge of the track.

Moreover, the shifting shaft is linearly moved along the axial extension in the first axial direction by the displacement mechanism. Accordingly, an axial position of the shifting shaft is affected by the displacement mechanism.

The first partial movement of the shifting shaft in the first axial direction is too short for the teeth of the relevant dog clutch to engage properly. Accordingly, the first partial movement is too short for a tooth interference to occur, or it is long enough for tooth interference to only just occur i.e., that the teeth of two halves of a dog clutch axially abut against each other but without any significant force being transferred between the two clutch halves.

The herein discussed tooth interference relates to tooth interference in a dog clutch i.e., when the teeth of respective halves of the dog clutch align and prevent the dog clutch halves from engaging with each other.

The displacement mechanism is configured to mechanically bias the shifting shaft in the first axial direction from the first intermediate position of the shifting shaft to the first gear engaging position. As such, the actuator is unloaded during the second partial movement of the shifting shaft.

During use of the gear shifting arrangement and the vehicle driving assembly, if at the first intermediate position the dog clutch of the relevant gear of the gearbox is positioned for the respective teeth of each half of the clutch to engage, the second partial movement is performed directly, in sequence with the first partial movement. However, in a tooth interference situation, when the teeth of the two halves of the clutch line up and prevent engagement between the two clutch halves, the second partial movement is delayed until the two clutch halves have been repositioned in relation to each other to allow for the teeth of each half of the clutch to engage. In the latter case, the mechanical bias by the displacement mechanism allows for the delayed second partial movement to be performed once adequate teeth engaging conditions have been formed. This so, while the actuator remains unloaded.

Namely, in the tooth interference situation, the actuator may complete a rotation of the barrel cam to a rotational position, wherein the track follower of the shifting shaft is in a position corresponding to the first gear engaging position, and then stop. However, as discussed above, the second partial movement is completed by the displacement mechanism once the tooth interference situation ends.

In a tooth interference situation e.g., the electric machine of the vehicle driving assembly may rotate the relevant gearwheel or the relevant shaft of the gearbox, such that the two halves of the relevant dog clutch rotate with a slight rotational speed difference. Eventually, the teeth of the two clutch halves no longer line up, the tooth interference situation ends, and the dog clutch halves can engage with each other.

Optionally, according to some examples the displacement mechanism may be configured to bias the shifting shaft from the first intermediate position in the first axial direction. In this manner, the displacement mechanism may perform the second partial movement of the shifting shaft.

For instance, such biasing may be performed by a spring mechanism.

Optionally, according to some examples the first track may comprise a guiding portion adjacent to the first inclined portion. The guiding portion may be configured to provide leeway to the track follower of the shifting shaft in the first track to allow for the displacement mechanism to cause the second partial movement of the shifting shaft in the first axial direction. In this manner, during a tooth interference situation, the actuator may be unloaded as the barrel cam may be rotated to a rotational position corresponding to where the track follower of the shifting shaft is when the shifting shaft is in the first gear engaging position.

Namely, the leeway may allow for the track follower of the shifting shaft to not having to follow in abutment with an edge of the first track. Since the displacement mechanism causes the second partial movement of the shifting shaft in the first axial direction, the abutment with an edge of the first track is not necessary after the shifting shaft has reached the first intermediate position.

The leeway may be provided by the guiding portion of the first track being wider than at the first inclined portion of the first track.

Optionally, according to some examples the displacement mechanism may be configured to have a neutral state with the shifting shaft at the neutral position and in which neutral state the shifting shaft is unbiased. In this manner, the displacement mechanism may be inactive with respect to any displacement of the shifting shaft i.e., when the displacement mechanism is in its neutral state.

For instance, then neutral state of the displacement mechanism may be maintained by the first track follower being positioned within the first track at a specific axial position, e.g. by a portion of the first track extending in parallel with the circumferential direction. Since in this manner, the shifting shaft is maintained in a fixed axial position, the shifting shaft cannot be moved to the first intermediate position, which would be required for the displacement mechanism to be activated for further displacement to the first gear engaging position.

If the displacement mechanism comprises a spring mechanism for biassing the shifting shaft in the first axial direction, the spring mechanism may be loaded, such as e.g. compressed, in the neutral state.

Optionally, according to some examples the displacement mechanism may be configured to have a first biasing state with the shifting shaft at the first intermediate position and in which first biasing state the shifting shaft is biased in the first axial direction. In this manner, the displacement mechanism may be arranged for displacing the shifting shaft towards the first gear engaging position.

For instance, the first biasing state of the displacement mechanism may be initiated by the first track follower following along the first inclined portion of the first track and thus, displace the shifting shaft to its first intermediate position. Accordingly, the neutral state of the displacement mechanism is changed to the first biasing state.

If the displacement mechanism comprises a spring mechanism for biassing the shifting shaft in the first axial direction, in the first biasing state, the spring mechanism may exert a force on the shifting shaft in the first axial direction, such as e.g. by decompressing the spring mechanism.

Optionally, according to some examples the first track may comprise a second inclined portion extending at an angle to the circumferential direction and being configured to cause a movement of the shifting shaft in a second axial direction opposite to the first axial direction, from the first gear engaging position to the neutral position as the track follower of the shifting shaft follows along the second inclined portion. In this manner, the shifting shaft may be returned to its neutral position, in which no gear is engaged, by the first track follower following along the second inclined portion of the first track. Thus, the shifting shaft is repositioned for renewed gear engagement.

As with the first inclined portion of the first track, the second inclined portion extending at an angle to a circumferential direction means that the second inclined portion is inclined in relation to an imaginary plane extending perpendicularly to the rotational axis.

The second inclined portion may be provided as a continuation from the first inclined portion, such that when the barrel cam is rotated in the same rotational direction that brought the first track follower into the first inclined portion, the first track follower will reach the second inclined portion. The second inclined portion will cause the movement of the shifting shaft in the second axial direction opposite to the first axial direction, from the first gear engaging position to the neutral position.

In an alternative example, the second inclined portion may be provided at the first inclined portion, such as at least partially in parallel with the first inclined portion. That is, by changing the rotational direction of the barrel cam, the first track follower will return the shifting shaft to its neutral position. The second inclined portion extending at least partially in parallel with the first inclined portion will cause the movement of the shifting shaft in the second axial direction opposite to the first axial direction, from the first gear engaging position to the neutral position.

Accordingly, in this example, the first and second inclined portions of the first track may be formed by opposite edges of the first track.

Optionally, according to some examples the first track may comprise a third inclined portion extending at an angle to the circumferential direction and being configured to cause a third partial movement of the shifting shaft in a second axial direction from the neutral position to a second intermediate position as the track follower of the shifting shaft follows along the third inclined portion. The displacement mechanism may be configured to be activated at the second intermediate position of the shifting shaft to cause a fourth partial movement of the shifting shaft in the second axial direction to a second gear engaging position. In this manner, a second gear of the gearbox may be shifted utilising the gear shifting arrangement.

In correspondence with the above-discussed movement of the shifting shaft to the first gear engaging position - the movement of the shifting shaft to the second gear engaging position does not rely solely on the track follower of the shifting shaft following the first track.

This means that the actuator is relieved of producing the required force during the entire shifting procedure when operating the gear shifting mechanism of the gearbox to shift gear therein. The actuator is only required to produce the force required for the third partial movement of the shifting shaft, from the neutral position to the second intermediate position. Specifically, in a tooth interference situation in the gearbox, the displacement mechanism ensures that the fourth partial movement of the shifting shaft in the second axial direction to the second gear engaging position is performed when tooth interference ceases, thus, unloading the actuator during the tooth interference situation.

The displacement mechanism is configured to mechanically bias the shifting shaft in the second axial direction from the second intermediate position of the shifting shaft to the second gear engaging position. As such, the actuator is unloaded during the fourth partial movement of the shifting shaft.

During use of the gear shifting arrangement and the vehicle driving assembly, if at the second intermediate position a dog clutch of the relevant gear of the gearbox is positioned for the respective teeth of each half of the clutch to engage, the fourth partial movement is performed directly, in sequence with the third partial movement. However, in a tooth interference situation, when the teeth of the two halves of the clutch line up and prevent engagement between the two clutch halves, the fourth partial movement is delayed until the two clutch halves have been repositioned in relation to each other to allow for the teeth of each half of the clutch to engage. In the latter case, the mechanical bias by the displacement mechanism allows for the delayed fourth partial movement to be performed once adequate teeth engaging conditions have been formed. This so, while the actuator remains unloaded.

Namely, in the tooth interference situation, the actuator may complete a rotation of the barrel cam to a rotational position, wherein the first track follower is in a position corresponding to the second gear engaging position, and then stop. However, as discussed above, the fourth partial movement is completed by the displacement mechanism once the tooth interference situation ends.

As with the first and second inclined portions of the first track, the third inclined portion extending at an angle to a circumferential direction means that the third inclined portion is inclined in relation to an imaginary plane extending perpendicularly to the rotational axis.

Optionally, according to some examples the displacement mechanism may be configured to bias the shifting shaft from the second intermediate position in the second axial direction. In this manner, the displacement mechanism may perform the fourth partial movement of the shifting shaft.

For instance, again, such biasing may be performed by a spring mechanism.

Optionally, according to some examples the displacement mechanism may be configured to have a second biassing state with the shifting shaft at the second intermediate position and in which second biasing state the shifting shaft is biased in the second axial direction. In this manner, the displacement mechanism may be arranged for displacing the shifting shaft towards the second gear engaging position.

For instance, the second biasing state of the displacement mechanism may be initiated by the first track follower following along the third inclined portion of the first track and thus, displace the shifting shaft to its second intermediate position. Accordingly, the neutral state of the displacement mechanism is changed to the second biasing state.

If the displacement mechanism comprises a spring mechanism for biassing the shifting shaft in the second axial direction, in the second biasing state, the spring mechanism may exert a force on the shifting shaft in the second axial direction, such as e.g. by decompressing the spring mechanism.

Optionally, according to some examples the displacement mechanism may comprise a spring-loaded member and the shifting shaft may be provided with at least a first recess. The spring-loaded member may be configured to follow along an inclined surface of the first recess from radially outside the first recess into a bottom portion of the first recess. In this manner, the displacement mechanism may be configured to bias the shifting shaft in the first axial direction.

For instance, the shifting shaft being at its neutral position means that the spring-loaded member is outside the first recess of the shifting shaft. Similarly, in the neutral state of the displacement mechanism, the spring-loaded member may be arranged outside the first recess.

When the shifting shaft is at its first intermediate position, the shifting shaft may be positioned for the spring-loaded member to abut against the inclined surface of the first recess. Thus, the spring-loaded member biases the shifting shaft towards the first gear engaging position. In this manner, the displacement mechanism may be configured to be activated at the first intermediate position of the shifting shaft to cause the second partial movement of the shifting shaft in the first axial direction to the first gear engaging position. Similarly, in the first biasing state of the displacement mechanism, the spring-loaded member may be positioned on the inclined surface of the first recess to bias the shifting shaft in the first axial direction.

The first gear engaging position of the shifting shaft may correspond to the spring-loaded member reaching the bottom portion of the first recess.

Optionally, according to some examples the shifting shaft may be provided with a second recess arranged adjacent to the first recess and the spring-loaded member may be configured to follow along an inclined surface of the second recess from radially outside the second recess into a bottom portion of the second recess. In this manner, the displacement mechanism may be configured to bias the shifting shaft in the second axial direction.

The shifting shaft being at its neutral position may mean that the spring-loaded member is outside the second recess of the shifting shaft. Similarly, in the neutral state of the displacement mechanism, the spring-loaded member may be arranged outside the second recess.

When the shifting shaft is at its second intermediate position, the shifting shaft may be positioned for the spring-loaded member to abut against the inclined surface of the second recess. Thus, the spring-loaded member biases the shifting shaft towards the second gear engaging position. In this manner, the displacement mechanism may be configured to be activated at the second intermediate position of the shifting shaft to cause the fourth partial movement of the shifting shaft in the second axial direction to the second gear engaging position.

Similarly, the displacement mechanism may have a second biassing state, in which the spring-loaded member may be positioned on the inclined surface of the second recess to bias the shifting shaft in the second axial direction.

The second gear engaging position of the shifting shaft may correspond to the spring-loaded member reaching the bottom portion of the second recess.

Optionally, according to some examples the spring-loaded member may comprise a ball member configured to fit into the first recess. In this manner, the displacement mechanism may be configured to smoothly interact with the inclined surface of the first recess.

Optionally, in examples wherein the shifting shaft is provided with a second recess, the ball member may be configured to fit into the second recess. Thus, the displacement mechanism may be configured to smoothly interact with the inclined surface of the second recess.

Further features of, and advantages with, the invention will become apparent when studying the appended claims and the following detailed description.

### BRIEF DESCRIPTION OF THE DRAWINGS

Various aspects and/or examples of the invention, including its particular features and advantages, will be readily understood from the examples discussed in the following detailed description and the accompanying drawings, in which:
Fig. 1 illustrates an example of a vehicle,
Figs. 2a and 2b schematically illustrate portions of a vehicle driving assembly,
Fig. 3 schematically illustrates a gear shifting arrangement and parts thereof,
Figs. 4a and 4b schematically illustrate an example of a first track of a barrel cam,
Figs. 5a and 5b schematically illustrate an example of a first track of a barrel cam,
Figs. 6a - 6c schematically illustrate a displacement mechanism in different states, and
Figs. 7a - 7e schematically illustrate an example of a shifting shaft of gear shifting arrangement.

### DETAILED DESCRIPTION

Aspects and/or examples of the invention will now be described more fully. Like numbers refer to like elements throughout. Well-known functions or constructions will not necessarily be described in detail for brevity and/or clarity.

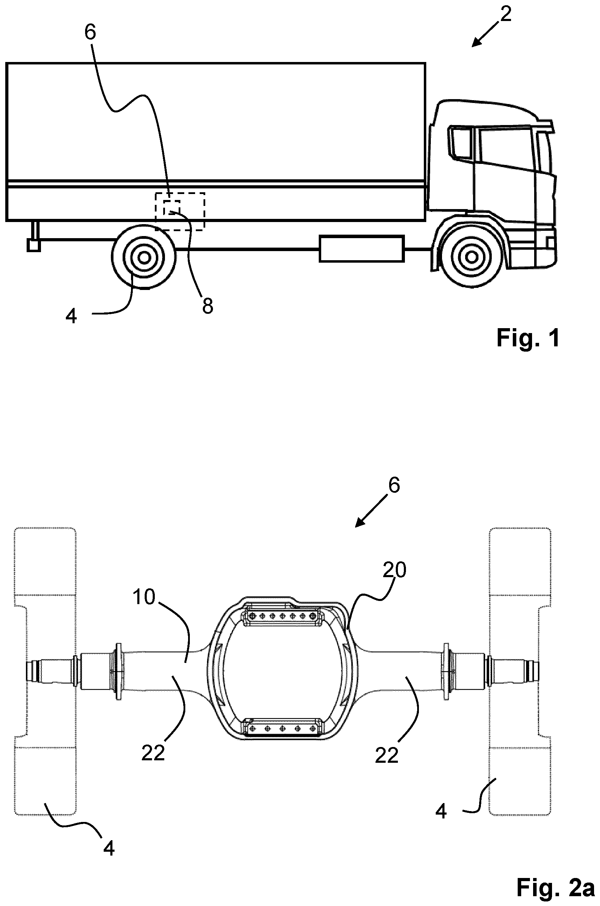

**Fig. 1** illustrates an example of a vehicle 2.

The vehicle 2 may be any kind of vehicle configured for land-based propulsion, such as e.g., a bus, a truck, a heavy truck, a car, or a train. In **Fig. 1****,** the vehicle 2 is illustrated as a heavy load vehicle in the form of a truck.

The vehicle 2 includes at least two drive wheels 4. The drive wheels 4 are devised to engage with a traveling surface to propel the vehicle 2.

The vehicle 2 includes a schematically indicated vehicle driving assembly 6, which is designed to support the at least two drive wheels 4 of the vehicle 2.

The drive wheels 4 are connected to drive shafts of the vehicle driving assembly 6. The drive shafts and the drive wheels 4 receive torque from an electric machine and/or other propulsion device, such as an internal combustion engine, via a gearbox, thereby driving the vehicle 2.

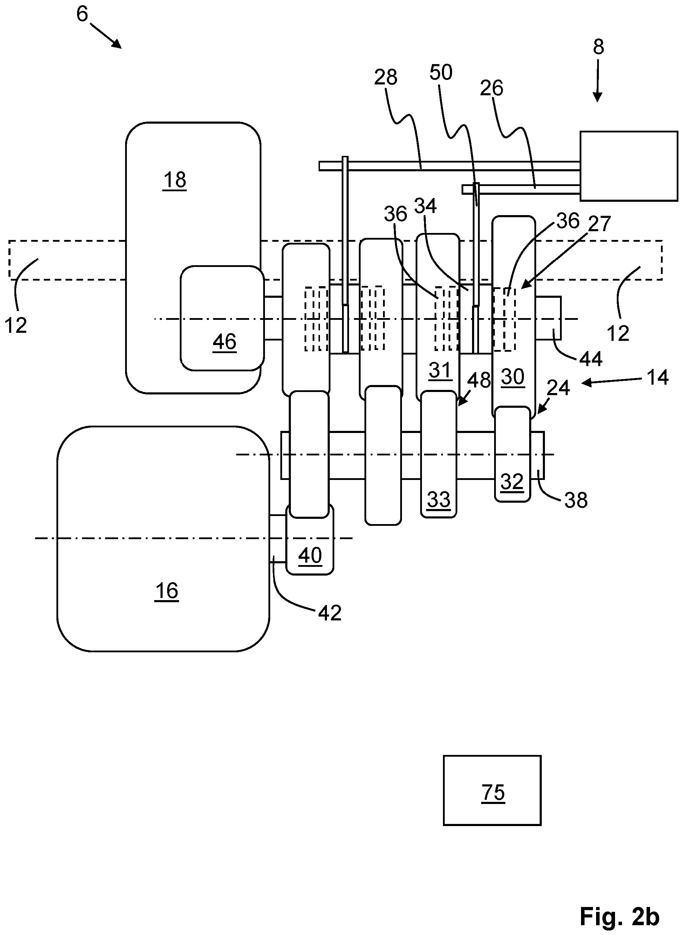

The electric machine and/or other propulsion device and the gearbox may form part of the vehicle driving assembly 6. An example of the vehicle driving assembly 6 is discussed below with reference to **Figs. 2a** **and** **2b****.**

The vehicle 2 and the vehicle driving assembly 6 also include a gear shifting arrangement 8, which controls shifting of at least on gear in the gearbox. The gear shifting arrangement 8 is further discussed below with reference to **Figs. 2a - 7e****.**

**Figs. 2a** **and** **2b** schematically illustrate portions of a vehicle driving assembly 6. The vehicle driving assembly 6 is a vehicle driving assembly 6 for a vehicle, such as one of the vehicles discussed above with reference to **Fig. 1****,** e.g. a vehicle 2 in the form of heavy load vehicle as shown. Accordingly, in the following reference is also made to **Fig. 1****.**

As mentioned above, the vehicle driving assembly 6 is configured to support at least two drive wheels 4 of the vehicle 2.

The vehicle driving assembly 6 comprises: an axle beam 10, two drive shafts 12 arranged to drive the drive wheels 4, a gearbox 14, an electric machine 16 configured to drive the two drive shafts 12 via the gearbox 14, and a gear shifting arrangement 8.

Optionally, as shown in **Fig. 2b****,** the gearbox 14 may drive the two drive shafts 12 via a differential 18.

**Fig. 2a** shows the axle beam 10 including a housing 20 inside which further components of the vehicle driving assembly 6 may be arranged. According to some examples, some components of the vehicle driving assembly 6 may be arranged outside the housing 20, such as being connected to an outside of the housing 20.

**Fig. 2b** schematically illustrates components of the vehicle driving assembly 6 to be arranged in connection with the axle beam 10, such as within, and/or attached to, the housing 20.

The axle beam 10 is designed to support the two drive wheels 4 of the vehicle 2. Thus, the axle beam 10 is a structural component of the vehicle driving assembly 6 and provides the necessary support and rigidity to the vehicle driving assembly 6.

The two drive shafts 12 are arranged to drive the drive wheels 4 of the vehicle 2. The drive shafts 12 are connected to the drive wheels 4 and are arranged to transfer a torque from the electric machine 16 via the gearbox 14 to the drive wheels 4. The drive shafts 12 are arranged between the gearbox 14 and the drive wheels 4.

The drive shafts 12 may be arranged between a differential 18 and the drive wheels 4. Further components may be provided between the electric machine 16 and the drive wheels 4.

Each of the drive shafts 12 may extend through a respective sidewardly extending portion 22 of the axle beam 10, e.g. from a differential 18 to towards the drive wheels 4. In **Fig. 2b****,** portions of the drive shafts 12 are shown with broken lines.

In examples comprising a differential 18, it is arranged between the gearbox 14 and the drive shafts 12. The differential 18 may be a component of the vehicle driving assembly 6 and in a known manner may be designed to distribute torque from the electric machine 16 to the drive shafts 12 and the drive wheels 4.

In the gearbox 14, gears are shifted for controlling the torque provided to the drive wheels 4 of the vehicle 2. The gear shifting arrangement 8 is configured to control the shifting of gears in the gearbox 14.

The gearbox 14 includes at least a first gear 24 that can be shifted under the control of the gear shifting arrangement 8. The gearbox 14 may include two gears, three gears, or four gears as shown in **Fig. 2b****,** or more than four gears. The gearbox 14 may have any suitable configuration that provides a desired number of gears for propelling the vehicle 2. Shifting of gears may be performed by linear movements in parallel with one or more rotational axes of shafts and gearwheels of the gearbox 14.

The first gear 24 need not be the gear with the highest gear ratio of the gearbox 14 and is herein only referred to as the first gear 24 for explanation purposes.

A shifting shaft 26 is arranged to shift at least the first gear 12 of the gearbox 14. The shifting shaft 26 is arranged to provide a linear movement.

If one or more of gears of the gearbox 14 so requires, a further shifting shaft 28 may be arranged to shift the relevant gear or gears. The further shifting shaft 28 may be arranged to provide a linear movement.

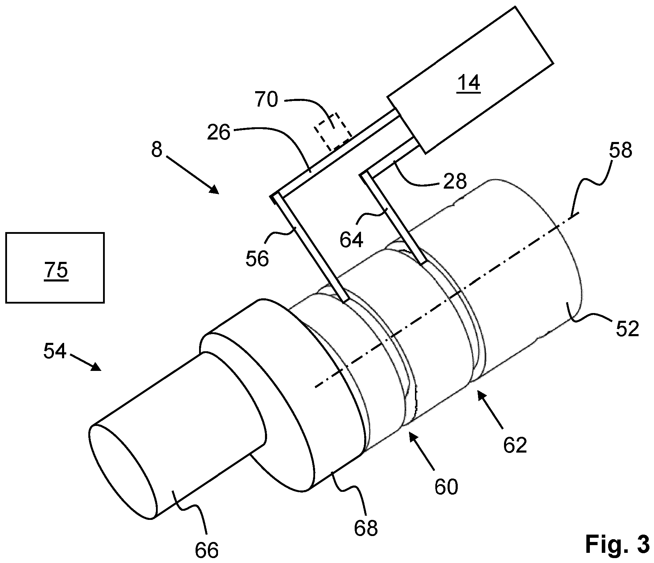

The movement of the shifting shaft 26, and if present, the movement of the further shifting shaft 28 is controlled by the gear shifting arrangement 8, see further below, with reference to **Figs. 3 - 7e****.**

Gearboxes including meshing gearwheels 30, 31, 32, 33 utilising shifting sleeves 34 and dog clutches 36 are known in the art, as is operation and shifting between gears within such gearboxes. For demonstrative purposes, in the context of the shifting of gears utilising the present gear shifting arrangement 8, an example gearbox 14 is briefly presented in the following with reference to **Fig. 2b****.**

Gearwheels 32, 33 are connected to a layshaft 38 of the gearbox 14 and are rotationally fixed in relation thereto. When the electric machine 16 is operated as an electric motor, the layshaft 38 and the gearwheels 32, 33 are driven by the electric machine 16 via a gearwheel 40 connected to a shaft 42 at the electric machine 16. The shaft 42 at the electric machine 16 may be an output shaft of the electric machine 16 or it may be an input shaft of the gearbox 14.

In the illustrated example, an output shaft 44 of the gearbox 14 is connected via a gearwheel 46 to a differential 18. A number of gearwheels 30, 31 are arranged on the output shaft 44.

These gearwheels 30, 31 are rotatable in relation to the output shaft 44. However, each of these gearwheels 30, 31 can be rotationally locked to the output shaft 44 by a dog clutch 36.

The gearbox 14 includes a first gear 24, a second gear 48, and according to some examples even further gears. Each gear in the gearbox 14 is designed to provide a specific gear ratio, thereby allowing the vehicle 2 to operate at various ranges of speeds and torques.

For the first gear 24 a corresponding first gearwheel 30 on the output shaft 44 meshes with a further first gearwheel 32 on the layshaft 38. When the first gearwheel 30 is rotationally locked to the output shaft 44, the first gear 24 is engaged and rotational movement from the electric machine 16 is transferred via the first gear 24 to the drive shafts 12.

For the second gear 48 a corresponding second gearwheel 31 on the output shaft 44 meshes with a further second gearwheel 33 on the layshaft 38. When the second gearwheel 31 is rotationally locked to the output shaft 44, the second gear 48 is engaged and rotational movement from the electric machine 16 is transferred via the second gear 48 to the drive shafts 12. The second gear 48 is designed to provide a gear ratio different from the gear ratio of the first gear 24, thereby allowing the vehicle 2 to operate at different speed and torque ranges.

In a similar manner any further gears of the gearbox 14 are engageable.

The gearbox 14 includes at least one shift sleeve 34. The shift sleeve 34 is arranged in connection with the output shaft 44 and the first and second gearwheels 30, 31, and is designed to enable the selection and engagement of the specific gears in the gearbox 14. One or more further shift sleeves may be provided if further gears/gearwheels are present in the gearbox 14.

The gearbox 14 includes dog clutches 36. The dog clutches 36 are designed to engage and disengage the first gearwheel 30 and the second gearwheel 31, and further gearwheels, if present, with the output shaft 44 of the gearbox 14. The dog clutches 36 allow for the selection and engagement of the specific gears in the gearbox 14. Each dog clutch 36 comprises two halves, one half connected, and rotationally locked, to the output shaft 44 and one half connected, and rotationally locked, to the relevant gearwheel 30, 31. The two halves of each dog clutch 36 utilise teeth and openings between the teeth to securely engage the relevant gearwheel 30, 31 with the output shaft 44.

The shift sleeve 34 is arranged to move the half of a relevant dog clutch 36 connected to the shaft 44 into and out of engagement with the other half of the dog clutch 36 connected to the relevant gearwheel 30, 31. Thus, the shift sleeve 34 supports the precise movement and synchronization of the gear engagement process.

In the example of **Fig. 2b****,** the first gear 24 is engaged i.e., the two halves of the dog clutch 36 of the first gear 24 are engaged to transfer torque from the electric machine 16 via the layshaft 38, the further first gearwheel 32, the first gearwheel 30 to the output shaft 44. The dog clutch 36 of the second gear 48 and of other gears, if present, remain disengaged.

The gearbox 14 includes at least one shifting fork 50. The shifting fork 50 is designed to control the precise movement of the shift sleeves 34 to provide the engagement and disengagement of the dog clutch 36 halves. The shifting fork 50 is directly or indirectly connected to the shifting shaft 26, such that the gear shifting arrangement 8 is enabled to shift gears in the gearbox 14.

Accordingly, a gear shifting mechanism 27 of the gearbox 14 may comprise one or more of a shifting fork 50, a shift sleeve 34, and a dog clutch 36.

In the illustrated example, the first gear 24 is shifted by the shifting shaft 26 and the second gear 48 is shifted by the shifting shaft 26. Further gears of the gearbox 14 may be shifted by the further shifting shaft 28 and even further shifting shafts may be provided for shifting even further gears.

The vehicle driving assembly 6 includes the electric machine 16. The electric machine 16 is designed to drive the two drive shafts 12 when it is operated as an electric motor. Batteries (not shown) may be provided aboard the vehicle 2 to power the electric machine 16 when operated as an electric motor.

The electric machine 16 may also be operable as an electric generator in order to charge the onboard batteries e.g., when the vehicle 2 is coasting downhill and the drive wheels 4 transfer torque to the electric machine 16 via the drive shafts 12 and the gearbox 14, in which a gear is engaged.

The rotational speed of the electric machine 16 may be controlled. A control arrangement 75 may be provided inter alia for this purpose. For instance, with a gear engaged in the gearbox 14, the torque of the electric machine 16 may be controlled to provide a desired traveling speed of the vehicle 2.

A further example is that during gear shifting in the gearbox 14, the rotational speed of the electric machine 16 may be controlled by the control arrangement 75 to synchronise the rotational speed of e.g. the first or second gearwheel 30, 31 in the gearbox 14 with that of the output shaft 44 of the gearbox 14, depending on which of the first or second gear 24, 48 is to be engaged.

A synchronised rotational speed is a rotational speed that matches a target rotational speed within a limited rotational speed difference range, such as within a range of 0 - 20 rpm rotational speed difference. A slight difference in rotational speed, such as within this range, may even be advantageous in tooth interference situations. In tooth interference situations, such rotational speed difference will prevent respective teeth of the two dog clutch halves of the relevant dog clutch 36 from being constantly positioned opposite to each other.

The synchronization of the two halves of a dog clutch 36 for engagement of a relevant gear 24, 48 involves the rotation of the relevant first or second gearwheel 30, 31 or any other relevant gearwheel at a speed substantially that of the output shaft 44. The first and second gearwheels 30, 31 are rotated via the meshing gearwheel 32, 33 on the layshaft 38 by the electric machine 16. The output shaft 44, in turn, has a rotational speed that depends on the rotational speed of the drive wheels 4 and a gear ratio between the drive wheels 4 and the output shaft 44 as dependent e.g., on the gear ratio within the differential 18 (if present) and between the differential 18 and the gearwheel 46 connecting the output shaft 44 to the differential 18.

The rotational speed of the electric machine 16 is controlled by the control arrangement 75. For this purpose, the control arrangement 75 includes relevant gear ratio data, rotational speed data, and calculation capability to synchronise rotational speeds such that the electric machine 16 rotates the relevant first or second gearwheel 30, 31, or any other relevant gearwheel, with substantially the same rotational speed as the output shaft 44.

The vehicle driving assembly 6 includes the gear shifting arrangement 8. The gear shifting arrangement 8 is designed to control the shifting of gears in the gearbox 14. Accordingly, movements of the shifting shaft 26 is controlled by the gear shifting arrangement 8. If present, also movement of the further shifting shaft 28 is controlled by the gear shifting arrangement 8. The gear shifting arrangement 8 is described in detail below with reference to **Figs. 3 - 7e****.**

**Fig. 3** schematically illustrates a gear shifting arrangement 8 and parts thereof.

The gear shifting arrangement 8 is configured to be utilised in a vehicle driving assembly and accordingly, in a vehicle. The vehicle driving assembly may be an assembly 6 as discussed herein, e.g. with reference to **Figs. 2a** **and** **2b****,** or of any other kind of vehicle driving assembly comprising a gearbox14, and the vehicle may be any of the vehicles discussed with reference to **Fig. 1****.** Accordingly, in the following reference is also made to **Figs. 1 - 2b****.**

The gear shifting arrangement 8 is configured for use with a gearbox 14 of a vehicle 2. The gear shifting arrangement 8 is configured for use with a vehicle driving assembly 6 of a vehicle 2.

The gear shifting arrangement 8 is designed to shift one or more gears in the gearbox 14. The gear shifting arrangement 8 comprises several components. These components include a cylindrical barrel cam 52, an actuator 54, such as an electric actuator 54, and the shifting shaft 26. The shifting shaft 26 is provided with a track follower 56, also referred to as a first track follower 56.

The barrel cam 52 has a rotational axis 58 and is provided with at least a first track 60. The actuator 54 is operatively connected to the barrel cam 52 and controls its rotation about the rotational axis 58.

The first track follower 56 is configured to follow the first track 60 as the barrel cam 52 is rotated about the rotational axis 58. The first track follower 56 is designed to connect to the shifting shaft 26 arranged to shift at least a first gear 24 of the gearbox 14.

The shifting shaft 26 is configured to be connected to a gear shifting mechanism 27 of the gearbox 14. The gear shifting mechanism 27 may comprise a shift sleeve 34 and a dog clutch 36 as discussed above with reference to **Fig. 2b****.** The shifting shaft 26 is provided with the first track follower 56 configured to follow along the first track 60 as the barrel cam 52 is rotated around its the rotational axis 58.

Optionally, the barrel cam 52 may be provided with a second track 62 to be followed by a second track follower 64 of a further shifting shaft 28. The barrel cam 52 may be provided with one or more further tracks (not shown) to be followed by respective track followers of further shifting shafts.

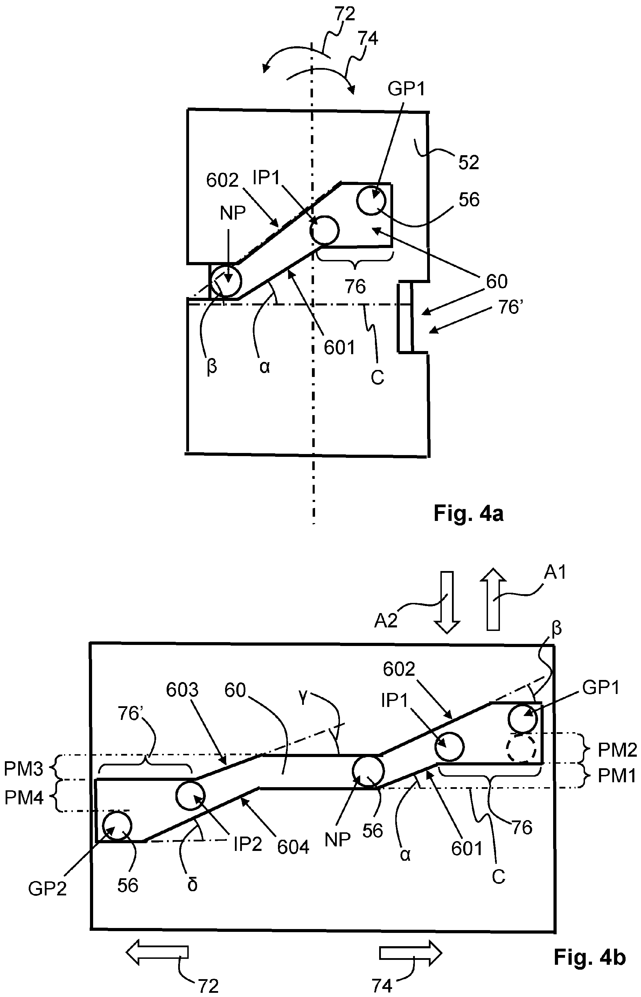

The first and second tracks 60, 62 are schematically shown in **Fig. 3****.** Specific examples of such tracks are discussed below with reference to **Figs. 4a - 4d.**

The actuator 54 is operatively connected to the barrel cam 52 and is responsible for rotation of the barrel cam 52. In the present example, comprising an electric actuator 54 includes an electric motor 66 and a transmission system 68, which may include one or more of a set of gears, a chain or pulley drive, a worm drive, etc. The electric motor 66 is connected to the transmission system 68, which is designed to transmit the rotation of the electric motor 68 to the barrel cam 52. The electric motor 66 is designed to provide the necessary power and speed to drive the rotation of the barrel cam 52, thereby controlling the movement of the first track follower 56 along the first track 60 on the barrel cam 52. The transmission system 68 is designed to reduce the rotational speed of the electric motor 66, thereby controlling the speed and direction of rotation of the barrel cam 52.

A control arrangement 75 is arranged to control the electric actuator 54 and thus, is arranged to control the speed and direction of rotation of the barrel cam 52. The control arrangement 75 may form part of the control arrangement 75 discussed above with reference to the control of the electric machine 16. Alternatively, the control arrangement 75 for controlling the electric actuator 54 may be a separate control arrangement.

A control arrangement 75 as discussed above with reference to **Figs. 2b** **and** **3** comprises a calculation unit which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression calculation unit may represent a processing circuitry comprising a plurality of processing circuits, such as, e.g., any, some or all of the ones mentioned above. The control arrangement 75 may comprise a memory unit. The calculation unit is connected to the memory unit, which provides the calculation unit with, for example, the stored programme code and/or stored data which the calculation unit needs to enable it to do calculations. The calculation unit may also be adapted to storing partial or final results of calculations in the memory unit. The memory unit may comprise a physical device utilised to store data or programs, i.e., sequences of instructions, on a temporary or permanent basis. The control arrangement 75 is connected inter alia to one or more of the electric machine 16, the electric actuator 54, rotational speed sensors (not shown), and/or position sensors (not shown), to enable control of the electric machine 16 and/or the gear shifting arrangement 8.

The shifting shaft 26 is moveable in a first axial direction of the shifting shaft 26. The axial direction of the shifting shaft 26 may be substantially in parallel with the rotational axis 58 of the barrel cam 52, from a neutral position to a first intermediate position as the track follower 56 of the shifting shaft 26 follows along a first inclined portion of the first track 60.

As will be discussed in more detail below with reference to **Figs. 4a - 7e****,** the shifting shaft 26 has a neutral position, a first intermediate position, and a first gear engaging position.

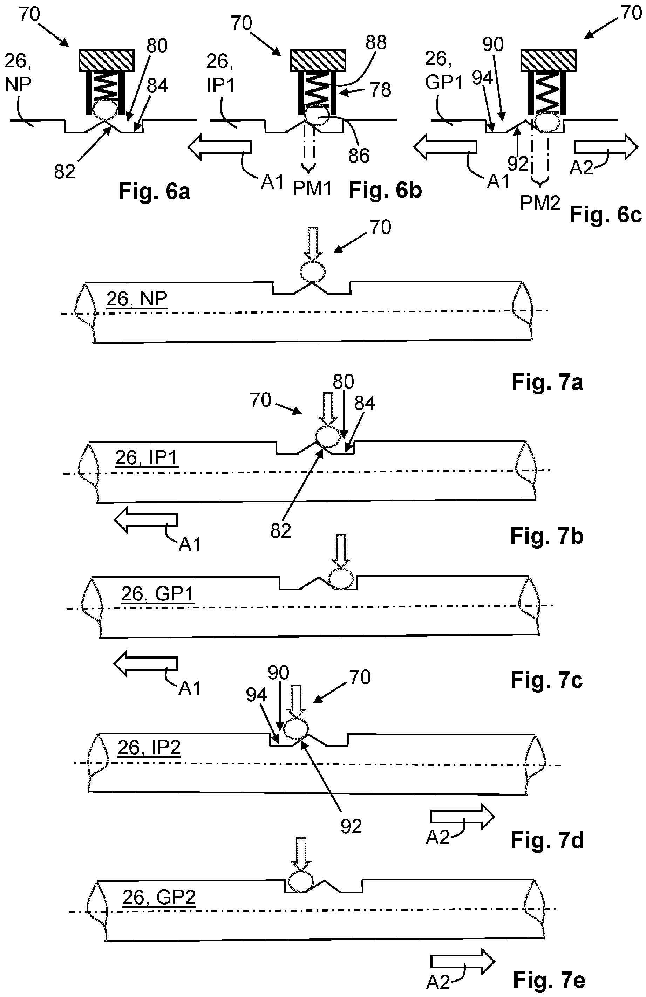

The gear shifting arrangement 8 comprises a displacement mechanism 70 configured to provide a partial movement of the shifting shaft 26 in the first axial direction. The displacement mechanism 70 is discussed below with reference to **Figs. 6a - 7e****.** An interaction between the displacement mechanism 70 and the shifting shaft 26 is discussed below with reference to **Figs. 4a - 7e****.**

**Figs. 4a and 4b** schematically illustrate an example of a first track 60 of a barrel cam 52. In **Fig. 4a****,** a side view of the barrel cam 52 is shown. In **Fig.4b****,** for illustration purposes, the surface of the barrel cam 52 is shown as it would look if it was flattened/rolled out.

The barrel cam 52 is an example of a barrel cam 52 of a gear shifting arrangement, such as the gear shifting arrangement 8 discussed above with reference to **Figs. 1-3****.** Accordingly, in the following reference is also made to **Figs. 1-3****.**

The operation of the gear shifting arrangement 8 involves the rotation of the barrel cam 52 in two directions about the rotational axis 58, a first direction 72 and a second direction 74. The rotation of the barrel cam 52 controls the movement of the first track follower 56 along the first track 60.

The first track 60 is at least in part formed by an at least partially circumferentially extending recesses in a body of the barrel cam 52.

The first track follower 56 is arranged to follow the first track 60 as the barrel cam 52 is rotated about the rotational axis 58. That is, as the barrel cam 52 is rotated about the rotational axis 58, the first track follower 56 is arranged to follow the first track 60, as discussed below. In **Figs. 4a and 4b****,** the first track follower 56 is indicated in the form of a circle in different positions in the first track 60. The shifting shaft 26 will be positioned in corresponding different positions.

For instance, the first track follower 56 may be equipped with a pin or roller for accurate tracking of the first track 60. The first track follower 56 may be biased radially inwardly against the barrel cam 52 to ensure reliable tracking in the first track 60.

In this example, the first track 60 extends substantially circumferentially around the entire barrel cam 52. However, the first track 60 has two ends i.e. the barrel cam 52 cannot be rotated continuously in one direction. The rotational direction has to change if the first track follower 56 reaches an end of the first track 60.

The first track 60 comprises a first inclined portion 601, extending at an angle α to a circumferential direction C of the barrel cam 52. As the barrel cam 52 is rotated in the first rotational direction 72, the first track follower 56 will follow along the first inclined portion 601. Thus, the first track follower 56 and together with it the shifting shaft 26 are moved in a first axial direction A1 of the shifting shaft 26.

Mentioned purely as an example, the angle α between the circumferential direction C of the barrel cam 26 and the first inclined portion 601 may be within a range of 3 - 45 degrees.

As the barrel cam 52 is rotated about its rotational axis 58, the first track follower 56 will be pressed against side surfaces of the first track 60. Accordingly, portions of the first track 60 discussed herein such as the first inclined portion 601, and that interact with the first track follower 56 to cause at least partial axial movement of the shifting shaft 26, may be edge portions of the first track 60.

By the first track follower 56 following along the first inclined portion 601, a first partial movement PM1 of the shifting shaft 26 in the first axial direction A1 is caused. The first partial movement PM1 of the shifting shaft 26 is from a neutral position NP to a first intermediate position IP1 of the shifting shaft 26.

As mentioned above, the gear shifting arrangement 8 comprises the displacement mechanism 70. The displacement mechanism 70 is configured to be activated at the first intermediate position IP1 of the shifting shaft 26. When activated, the displacement mechanism causes a second partial movement PM2 of the shifting shaft 52 in the first axial direction A1 to a first gear engaging position GP1. In **Fig. 4b****,** the second partial movement PM2 is implied by the first track follower 56 shown with a broken line at the first intermediate position IP1 and with a full line at the first gear engaging position GP1.

The functionality of the displacement mechanism 70 is discussed below with reference to **Figs. 6a** - **7e****.**

The first track 60 comprises a guiding portion 76 adjacent to the first inclined portion 601. The guiding portion 76 is configured to provide leeway to the first track follower 56 in the first track 60. This means that at the guiding portion 76, the first track 60 is broader than the first track follower 56. Accordingly, the first track follower 56 can be moved in the first axial direction A1 within the guiding portion 76.

This allows for the displacement mechanism 70 to cause the second partial movement PM2 of the shifting shaft 26 in the first axial direction A1. The first track 60 is not required for the first track follower 56 and the shifting shaft 26 to reach the first gear engaging position GP1, from the first intermediate position IP1.

As discussed herein, during a tooth interference situation of the relevant dog clutch of the gearbox 14, the actuator 54 is unloaded since the displacement mechanism 70 causes the second partial movement PM2 of the shifting shaft 26 in the first axial direction A1.

In **Figs. 4a and 4b****,** the neutral position NP, the first intermediate position IP1, and the first gear engaging position GP1 are indicated at the first track follower 56. Since the first track follower 56 is connected to the shifting shaft 26, the shifting shaft 26 will have corresponding first neutral, first intermediate, and first gear engaging positions NP, IP1, GP1.

In **Figs. 4a and 4b****,** the first track follower 56 appears to move around the barrel cam 52. However, in practise the barrel cam 52 rotates about the rotational axis 58 and the first track follower 56 only moves in a axial directions A1, A2 of the shifting shaft 26 substantially in parallel with the rotational axis 58.

As mentioned above, the first track follower 56 is connected to the shifting shaft 26 and the shifting shaft 26 is connected to the gear shifting mechanism 27 of the gearbox 14. Movement of the shifting shaft 26 in the first axial direction A1 to the first gear engaging position GP1 causes the first gear 24 to be engaged in the gearbox 14.

The first track 60 comprises a second inclined portion 602 extending at an angle β to the circumferential direction C of the barrel cam 52. As the barrel cam 52 is rotated in the second rotational direction 74, the first track follower 56 will follow along the second inclined portion 602. Thus, the first track follower and together with it the shifting shaft 26 are moved in a second axial direction A2 of the shifting shaft 26, opposite to the first axial direction A1.

By the first track follower 56 following along the second inclined portion 602, a movement from the first gear engaging position GP1 to the neutral position NP of the shifting shaft 26 in the second axial direction A2 is caused.

Thus, the shifting shaft 26 is returned to the neutral position NP, in which the first gear 24 is disengaged in the gearbox 14.

In this example, the second inclined portion 602 is provided at the first inclined portion 601 at an opposite edge of the first track 60 to the first inclined portion 601. By rotating the barrel cam 52 in the second rotational direction 74, the shifting shaft 26 is returned to the neutral position NP.

In the example of **Figs. 4a and 4b****,** the first track 60 comprise a third inclined portion 603 extending at an angle γ to the circumferential direction C, which causes a third partial movement PM3 of the shifting shaft 26 in the second axial direction A2 from the neutral position NP to a second intermediate position IP2 as the first track follower 56 follows along the third inclined portion 603.

As the barrel cam 52 is rotated in the second rotational direction 74, the first track follower 56 will follow along the third inclined portion 603. Thus, the first track follower 56 and together with it the shifting shaft 26 are moved in the second axial direction A2 of the shifting shaft 26.

The displacement mechanism 70 is activated at the second intermediate position IP2 of the shifting shaft 26. When activated, the displacement mechanism 70 causes a fourth partial movement PM4 of the shifting shaft 26 in the second axial direction A2 to a second gear engaging position GP2.

Movement of the shifting shaft 26 in the second axial direction A2 to the second gear engaging position GP2 causes the second gear 48 to be engaged in the gearbox 14.

The first track 60 comprises a further guiding portion 76' adjacent to the third inclined portion 603. Similarly to the discussion above related to the guiding portion 76, the further guiding portion 76' is configured to provide leeway to the first track follower 56 in the first track 60. Again, this means that at the further guiding portion 76', the first track 60 is broader than the first track follower 56. Accordingly, the first track follower 56 can be moved in the first axial direction A1 within the further guiding portion 76'.

This allows for the displacement mechanism 70 to cause the fourth partial movement PM4 of the shifting shaft 26 in the second axial direction A2. The first track 60 is not required for the first track follower 56 and the shifting shaft 26 to reach the second gear engaging position GP2, from the second intermediate position IP2.

The first track 60 comprises a fourth inclined portion 604 extending at an angle δ to the circumferential direction C of the barrel cam 52. As the barrel cam 52 is rotated in the first rotational direction 72, the first track follower 56 will follow along the fourth inclined portion 604. Thus, the first track follower 56 and together with it the shifting shaft 26 are moved in the first axial direction A1 of the shifting shaft 26.

By the first track follower 56 following along the fourth inclined portion 604, a movement from the second gear engaging position GP2 to the neutral position NP of the shifting shaft 26 in the first axial direction A1 is caused.

Thus, the shifting shaft 26 is returned to the neutral position NP, in which the second gear 48 is disengaged in the gearbox 14.

The fourth inclined portion 604 is provided at the third inclined portion 603 at an opposite edge of the first track 60 to the third inclined portion 603. By rotating the barrel cam 52 in the first rotational direction 72, the shifting shaft 26 is returned to the neutral position NP.

A control of the rotation of the barrel cam 52, e.g. in the control arrangement 75, is configured to continue the rotation of the barrel com 52 from a rotational position, at which the first track follower 56 reaches one of the first or second intermediate position IP1, IP2, to a rotational position that correspond to the respective first or second gear engaging position GP1, GP2. This so, despite the displacement mechanism 70 causing the second or fourth partial movement PM2, PM4 to the first or second gear engaging position GP1, GP2 of the shifting shaft 26. Thus, the first track follower 56 is position for returning to the shifting shaft 26 to its neutral position NP along the relevant inclined portion 602, 604 of the first track 60 when a relevant gear is to be disengaged.

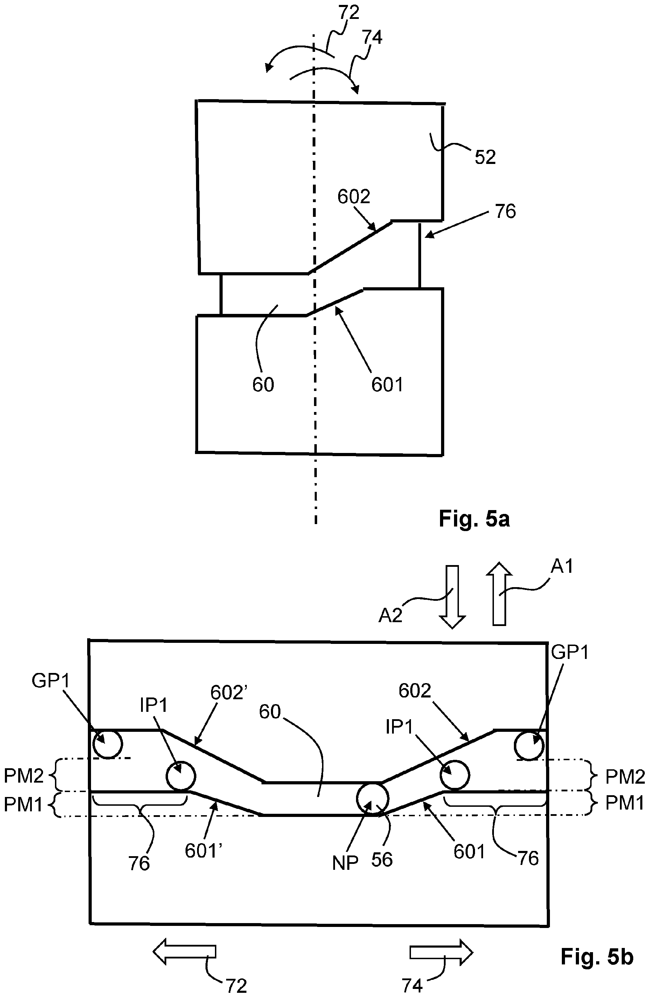

**Figs. 5a and 5b** schematically illustrate an example of a first track 60 of a barrel cam 52. In **Fig. 5a****,** a side view of the barrel cam 52 is shown. In **Fig.5b****,** for illustration purposes, the surface of the barrel cam 52 is shown as it would look if it was flattened/rolled out.

The barrel cam 52 is an example of a barrel cam 52 of a gear shifting arrangement, such as the gear shifting arrangement 8 discussed above with reference to **Figs. 1-3****.** Accordingly, in the following reference is also made to **Figs. 1-3****.**

The example of **Figs. 5a and 5b** resembles in much the example discussed with reference to **Figs. 4a and 4b****.** Accordingly, in the following, mainly the differences will be discussed. Otherwise, reference is made to the description relating to **Figs. 4a and 4b****.**

Again, the rotation of the barrel cam 52 controls the movement of the first track follower 56 along the first track 60.

In this example, the first track 60 forms a continuously extending track around the entire barrel cam 52. That is, the barrel cam 52 can be rotated in one direction more than one full revolution for the first track follower 56 to follow along it. Still, the barrel cam 52 may be rotatable in both the first and the second rotational directions 72, 74.

In this example, the first track 60 is configured for engaging and disengaging one gear only of the gearbox 14, such as the first gear 24.

Again, the first track 60 comprises a first inclined portion 601 for moving the first track follower 56 and together with it the shifting shaft 26 in the first axial direction A1, and thus, causing a first partial movement PM1 of the shifting shaft 26 in the first axial direction A1 from the neutral position NP to the first intermediate position IP1 of the shifting shaft 26.

Again, the displacement mechanism 70 is configured to be activated at the first intermediate position IP1 to cause the second partial movement PM2 of the shifting shaft 52 in the first axial direction A1 to the first gear engaging position GP1 for the first gear 24 to be engaged in the gearbox 14.

Again, the first track 60 comprises a second inclined portion 602 for moving the first track follower 56 and together with it the shifting shaft 26 in the second axial direction A2, and thus, causing a movement from the first gear engaging position GP1 to the neutral position NP of the shifting shaft 26 for disengaging the first gear 24 in the gearbox 14.

Rotating the barrel cam 52 with the first track follower 56 at the neutral position NP in the first rotational direction 72, the first track follower 56 will follow along the first inclined portion 601, as discussed in above. Rotating the barrel cam 52 with the first track follower 56 at the first gear engaging position GP1 in the second rotational direction 74, the first track follower 56 will follow along the second inclined portion 602, as discussed in above.

However, in the present example, the first track 60 is provided with further inclined portions 601', 602', which will move the first track follower 56 and the shifting shaft in the first and second axial directions A1, A2, respectively. Accordingly, a further first inclined portion 601' of the first track 60 causes a first partial movement PM1 of the shifting shaft 26 in the first axial direction A1 from the neutral position NP to the first intermediate position IP1 of the shifting shaft 26, from which again, the first displacement arrangement 70 causes the second partial movement PM2 of the shifting shaft 56. Similarly, a further second inclined portion 602' of the first track 60 causes a movement from the first gear engaging position GP1 to the neutral position NP of the shifting shaft 26.

The track follower 56 will interact with the respective further inclined portions 601', 602' at opposite rotational directions 72, 74 to its interaction with the first and second inclined portions 601, 602. Accordingly, the track follower 56 will interact with the further first inclined portion 601' when the barrel cam 52 is rotated in the second rotational direction 74, and the track follower 56 will interact with the further second inclined portion 602' when the barrel cam 52 is rotated in the first rotational direction 72.

Again, the first track 60 comprises a guiding portion 76 adjacent to the first inclined portion 601, which guiding portion 76 is configured to provide leeway to the first track follower 56 in the first track 60 allowing for the displacement mechanism 70 to cause the second partial movement PM2 of the shifting shaft 26.

Since the first track 60 extends continuously around the barrel cam 52, the guide portion 76, in the present example, extends between the first inclined portion 601 and the further first inclined portion 601'.

This arrangement of the first, second, further first, and further second inclined portions 601, 602, 601', 602' means that the further second inclined portion 602' is provided as a continuation from the first inclined portion 601, such that when the barrel cam 52 is rotated in the same rotational direction (first rotational direction 72) that brought the first track follower 56 into the first inclined portion 601, the first track follower 56 will reach the further second inclined portion 602'. Similarly, the second inclined portion 602 is provided as a continuation from the further first inclined portion 601', such that when the barrel cam 52 is rotated in the same rotational direction (second rotational direction 74) that brought the first track follower 56 into the further first inclined portion 601', the first track follower 56 will reach the second inclined portion 602. Thus, engaging and disengaging of the first gear 24 alternatively, may be performed by the barrel cam 52 rotating in the same direction.

According to alternative examples, a continuously extending first track 60 of the barrel cam 52 may be provided, which first track 60 is configured for engaging both a first and a second gear.

As discussed above, the barrel cam 52 may be provided with a second track 62 and even further tracks. The second track 62 and further tracks may be configured in a similar manner to the first track 60 as discussed above with reference to **Figs. 4a - 5b****.** Naturally, the tracks 60, 62 of the barrel cam 52 have to be laid out such that simultaneous engagement of two gears is avoided. For instance, at a rotational angle interval wherein one gear is engaged and disengaged by the relevant track follower interacting with inclined portions of the relevant track, the track follower of each further track is maintained at its respective neutral position by suitable extension of the relevant track along the barrel cam 52.

**Figs. 6a - 6c** schematically illustrate a displacement mechanism 70 in different states.

The displacement mechanism 70 is an example of a displacement mechanism 70 comprised in the gear shifting arrangement 8 discussed above with reference to **Figs. 1 - 5b****.** Accordingly, in the following reference is also made to the discussions of **Figs. 1 - 5b****.**

As discussed above with reference to **Figs. 4a - 5b****,** the shifting shaft 26 is moved by the first track follower 56 following the first inclined portion 601 of the first track 60 in order to move the first partial movement PM1 in the first axial direction A1, from the neutral position NP to the first intermediate position IP1.

The displacement mechanism 70 is configured to be activated at the first intermediate position IP1 of the shifting shaft 26 to cause the second partial movement PM2 of the shifting shaft 26 in the first axial direction A1 to the first gear engaging position GP1 of the shifting shaft 26.

In **Fig. 6a****,** a portion of the shifting shaft 26 is shown in its neutral position NP. In **Fig. 6b****,** the portion of the shifting shaft 26 is shown at its first intermediate position IP1, in which the shifting shaft 26 has been moved the first partial movement PM1 from its neutral position NP. In **Fig. 6c****,** the portion of the shifting shaft 26 is shown at its first gear engaging position GP1, in which the shifting shaft 26 has been moved the second partial movement PM2 from its first intermediate position IP1.

The displacement mechanism 70 is configured to bias the shifting shaft 26 from the first intermediate position IP1 in the first axial direction A1. Such biasing achieves the second partial movement PM2 of the shifting shaft 26.

Accordingly, the biasing of the shifting shaft 26 in the first axial direction A1 is activated at the first intermediate position IP1 of the shifting shaft 26.

In the present example, the displacement mechanism 70 comprises a spring mechanism, such as a spring-loaded member 78 which is arranged to bias the shifting shaft 26 in the first axial direction A1.

The shifting shaft 26 is provided with at least a first recess 80. An inclined surface 82 of the first recess 80 extends from radially outside the first recess 80 into a bottom portion 84 of the first recess 80. The spring-loaded member 78 is configured to follow along the inclined surface 82 of the first recess 80.

The spring-loaded member 78 interacts with the inclined surface 82 of the first recess 80 for moving the shifting shaft 26 the second partial movement IP2. The displacement mechanism 70 is stationary relative an axial extension of the shifting shaft 26. The axial extension of the shifting shaft 26 extends in parallel with the first and second axial directions A1, A2.

The shifting shaft 26 is moveable along its axial extension, in the first and second axial directions A1, A2. The shifting shaft 26 is guided in the gear shifting arrangement 8, and optionally in the gearbox 14, such that it is prevented from moving radially to its axial extension.

For instance, the spring-loaded member 78 may comprise a ball member 86 configured to fit into the first recess 80. The spring-loaded member 78 may further comprise a compression spring 88, which is more compressed when the shifting shaft 26 is at its neutral position NP than at its first intermediate position IP1. The spring 88 is more compressed when the shifting shaft 26 is at its first intermediate position IP1 than at its first gear engaging position GP1. Accordingly, the ball member 86 is moveable radially to the axial extension of the shifting shaft 26.

The inclined surface 82 is inclined in relation to the axial extension of the shifting shaft 26, and the first axial direction A1. The term radially in the context of the position radially outside the first recess 80 relates to the axial extension of the shifting shaft 26.

When the shifting shaft 26 is at its neutral position NP, as shown in **Fig. 6a****,** the spring-loaded member 78 is radially outside the first recess 80, such as the ball member 86 is radially outside the first recess 80.

The displacement mechanism 70 is configured to have a neutral state with the shifting shaft 26 at the neutral position NP, i.e. as shown in **Fig. 6a****.** In the neutral state the shifting shaft 26 is unbiased. The displacement mechanism 70 remains inactivated as long as its neutral state is maintained.

The displacement mechanism 70 is configured to have a first biasing state with the shifting shaft 26 at the first intermediate position IP1. In the first biasing state, the shifting shaft 26 is biased in the first axial direction A1, i.e. as shown in **Fig. 6b****.**

In the first biasing state, the spring-loaded member 78 exerts a force on the inclined surface 82 of the first recess 80, which moves the shifting shaft 26 in the first axial direction A1.

The first biasing state is initiated by the first track follower 56 following along the first inclined portion 601 of the first track 60, see e.g. **Figs. 4a - 5b****.** This moves the shifting shaft 26 to its first intermediate position IP1. Accordingly, the actuator 54 of the gear shifting arrangement 8 produces the force required for the first partial movement IP1 of the shifting shaft 26, from the neutral position NP to the first intermediate position IP1.

In the example of **Figs. 6a - 6c****,** the shifting shaft 26 is provided with a second recess 90 arranged adjacent to the first recess 80. The spring-loaded member 78 is configured to follow along an inclined surface 92 of the second recess 90 from radially outside the second recess 90 into a bottom portion 94 of the second recess 90, in a similar manner to the spring-loaded member 78 being configured to follow along the inclined surface 82 of the first recess 80.

The spring-loaded member 78 interacts with the inclined surface 92 of the second recess 90 for moving the shifting shaft 26 the fourth partial movement PM4. The inclined surface 92 is inclined in relation to the axial extension of the shifting shaft 26.

When the shifting shaft 26 is at its neutral position NP, as shown in **Fig. 6a****,** the spring-loaded member 78 is radially outside the second recess 90, such as the ball member 86 is radially outside the second recess 90.

The displacement mechanism 70 is configured to have a second biasing state with the shifting shaft 26 at the second intermediate position IP2. In the second biasing state, the shifting shaft 26 is biased in the second axial direction A2.

In the second biasing state, the spring-loaded member 78 exerts a force on the inclined surface 92 of the second recess 90, which moves the shifting shaft 26 in the second axial direction A2.

The second biasing state is initiated by the first track follower 56 following along the third inclined portion 603 of the first track 60, see **Fig. 4b****.** This moves the shifting shaft 26 to its second intermediate position IP2. Accordingly, the actuator 54 of the gear shifting arrangement 8 produces the force required for the third partial movement PM3 of the shifting shaft 26, from the neutral position NP to the second intermediate position IP2.

In the gearbox 14, the first partial movement PM1 of the shifting shaft 26 is too short for the teeth of the dog clutch of the relevant gear to properly engage. Accordingly, the first partial movement PM1 is too short for a tooth interference to occur in the gearbox 14.

Similarly, in the gearbox 14, the third partial movement PM3 of the shifting shaft 26 is too short for the teeth of the dog clutch of the relevant gear to properly engage. Accordingly, the third partial movement PM3 is too short for a tooth interference to occur in the gearbox 14.

As discussed, at the first intermediate position IP1, the displacement mechanism 70 is activated to biases and moves the shifting shaft 26 to the first gear engaging position GP1. Since the displacement mechanism 70 mechanically biases the shifting shaft 26 in the first axial direction A1, the actuator 54 is relieved of producing a force that moves the shifting shaft 26 to its first gear engaging position GP1. In a tooth interference situation in the gearbox 14, the mechanical biasing of the shifting shaft 26 enables avoiding of negative operating situations of e.g. the electric actuator 54, such as stalling, high current situations, and/or high heat output.

The same applies in a corresponding manner at the third intermediate position IP3, where the displacement mechanism 70 is activated to biases and moves the shifting shaft 26 to the second gear engaging position GP2.

In choosing a suitable electric motor 66 of the electric actuator 54 thus, a smaller sized and less costly electric motor 66 may be selected than what is other possible if such negative operating situations would have to be accounted for.

If a tooth interference situation occurs in the gearbox 14 during gear shifting, the displacement mechanism 70 remains in its first or second biasing state until the tooth interference situation ceases. In order to end the tooth interference situation, the electric machine 16 of the vehicle driving assembly 6 may rotate e.g. the relevant gearwheel 30, 31 of the gearbox 14, such that the two halves of the relevant dog clutch 36 rotate with a slight rotational speed difference. Eventually, the teeth of the dog clutch 36 are in a position for the two halves to engage and the tooth interference situation ends.

**Figs. 7a - 7e** schematically illustrate an example of a shifting shaft 26 of gear shifting arrangement. The gear shifting arrangement may be a gear shifting arrangement 8 as discussed above with reference to **Figs. 1 - 6c****.** Accordingly, in the following reference is also made to the discussions of **Figs. 1 - 6c****.**

As discussed above with reference to **Figs. 4a - 6c****,** the shifting shaft 26 is moved from the neutral position NP to the first intermediate position IP1, and from the first intermediate position IP1 to the first gear engaging position GP1 when the first gear 24 is to be engaged in the gearbox 14. The shifting shaft 26 is moved from the first gear engaging position GP1 to the neutral position NP when the first gear 24 is to be disengaged in the gearbox 14. As discussed above with reference to **Figs. 4a, 4b** **and** **6a - 6c**,The shifting shaft 26 is moved from the neutral position NP to the second intermediate position IP2, and from the second intermediate position IP2 to the second gear engaging position GP2 when the second gear 48 is to be engaged in the gearbox 14. The shifting shaft 26 is moved from the second gear engaging position GP2 to the neutral position NP when the second gear 48 is to be disengaged in the gearbox 14.

In **Fig. 7a****,** a portion of the shifting shaft 26 is shown at its neutral position NP. In **Fig. 7b****,** the portion of the shifting shaft 26 is shown at its first intermediate position IP1. In **Fig. 7c****,** the portion of the shifting shaft 26 is shown at its first gear engaging position GP1. In **Fig. 7d****,** the portion of the shifting shaft 26 is shown at its second intermediate position IP2. In **Fig. 7e****,** the portion of the shifting shaft 26 is shown at its second gear engaging position GP2.

In **Fig. 7b****,** the displacement mechanism 70 is in its first biasing state with the shifting shaft 26 at the first intermediate position IP1. In **Fig. 7d****,** the displacement mechanism 70 is in its second biasing state with the shifting shaft 26 at the second intermediate position IP2.

As mentioned above, the shifting shaft 26 is provided with the first recess 80. The inclined surface 82 of the first recess 80 extends from radially outside the first recess 80 into the bottom portion 84 of the first recess 80. The spring-loaded member 78 is configured to follow along the inclined surface 82 of the first recess 80. Thus, the displacement mechanism 70 is configured to bias the shifting shaft 26 from the first intermediate position IP1 in the first axial direction A1. Such biasing achieves the second partial movement PM2 of the shifting shaft 26.

The shifting shaft 26 is provided with the second recess 90 arranged adjacent to the first recess 80. The spring-loaded member 78 is configured to follow along the inclined surface 92 of the second recess 90 from radially outside the second recess 90 into the bottom portion 94 of the second recess 90, in a similar manner to the spring-loaded member 78 being configured to follow along the inclined surface 82 of the first recess 80. Thus, the displacement mechanism 70 is configured to bias the shifting shaft 26 from the second intermediate position IP2 in the second axial direction A2 in a corresponding manner to the biasing of the shifting shaft 26 from the first intermediate position IP1 in the first axial direction A1. Such biasing achieves the fourth partial movement PM4 of the shifting shaft 26.

Accordingly, the biasing of the shifting shaft 26 in the second axial direction A2 is activated at the second intermediate position IP2 of the shifting shaft 26.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the foregoing is illustrative of various examples and that the invention is defined only by the appended claims. A person skilled in the art will realize that the examples may be modified, and that different features of the examples may be combined to create examples other than those described herein, without departing from the scope of the invention, as defined by the appended claims.

## Claims

1. A gear shifting arrangement (8) for a gearbox (14) of a vehicle (2), the arrangement (8) comprising
a barrel cam (52) having a rotational axis (58) and being provided with at least a first track (60),
an actuator (54) operatively connected to the barrel cam (52) for controlling a rotation of the barrel cam (52) around the rotational axis (58), and
at least one shifting shaft (26) configured to be connected to a gear shifting mechanism (27) of the gearbox (14) and provided with a track follower (56) configured to follow along the first track (60) as the barrel cam (52) is rotated around the rotational axis (58), wherein
the first track (60) comprises a first inclined portion (601) extending at an angle (α) to a circumferential direction (C) and being configured to cause a first partial movement (PM1) of the shifting shaft (26) in a first axial direction (A1) from a neutral position (NP) to a first intermediate position (IP1) as the track follower (56) of the shifting shaft (26) follows along the first inclined portion (601), and wherein
the arrangement (8) further comprises a displacement mechanism (70) configured to be activated at the first intermediate position (IP1) of the shifting shaft (26) to cause a second partial movement (PM2) of the shifting shaft (26) in the first axial direction (A1) to a first gear engaging position (GP1).

2. The gear shifting arrangement (8) according to claim 1, wherein the displacement mechanism (70) is configured to bias the shifting shaft (26) from the first intermediate position (IP1) in the first axial direction (A1).

3. The gear shifting arrangement (8) according to claim 1 or 2, wherein the first track (60) comprises a guiding portion (76) adjacent to the first inclined portion (601), the guiding portion (76) being configured to provide leeway to the track follower (56) of the shifting shaft (26) in the first track (60) to allow for the displacement mechanism (70) to cause the second partial movement (PM2) of the shifting shaft (26) in the first axial direction (A1).

4. The gear shifting arrangement (8) according to any one of the preceding claims, wherein the displacement mechanism (70) is configured to have a neutral state with the shifting shaft (26) at the neutral position (NP) and in which neutral state the shifting shaft (26) is unbiased.

5. The gear shifting arrangement (8) according to any one of the preceding claims, wherein the displacement mechanism (70) is configured to have a first biasing state with the shifting shaft (26) at the first intermediate position (IP1) and in which first biasing state the shifting shaft (26) is biased in the first axial direction (A1).

6. The gear shifting arrangement (8) according to any one of the preceding claims, wherein the first track (60) comprises a second inclined portion (602) extending at an angle (β) to the circumferential direction (C) and being configured to cause a movement of the shifting shaft (26) in a second axial direction (A2) opposite to the first axial direction (A1), from the first gear engaging position (GP1) to the neutral position (NP) as the track follower (56) of the shifting shaft (26) follows along the second inclined portion (602).

7. The gear shifting arrangement (8) according to any one of the preceding claims, wherein the first track (60) comprises a third inclined portion (603) extending at an angle (γ) to the circumferential direction (C) and being configured to cause a third partial movement (PM3) of the shifting shaft (26) in a second axial direction (A2) from the neutral position (NP) to a second intermediate position (IP2) as the track follower (56) of the shifting shaft (26) follows along the third inclined portion (603), and wherein
the displacement mechanism (70) is configured to be activated at the second intermediate position (IP2) of the shifting shaft (26) to cause a fourth partial movement (PM4) of the shifting shaft (26) in the second axial direction (A2) to a second gear engaging position (GP2).

8. The gear shifting arrangement (8) according to claim 8, wherein the displacement mechanism (70) is configured to bias the shifting shaft (26) from the second intermediate position (IP2) in the second axial direction (A2).

9. The gear shifting arrangement (8) according to claim 8, wherein the displacement mechanism (70) is configured to have a second biassing state with the shifting shaft (26) at the second intermediate position (IP2) and in which second biasing state the shifting shaft (26) is biased in the second axial direction (A2).

10. The gear shifting arrangement (8) according to any one of the preceding claims, wherein the displacement mechanism (70) comprises a spring-loaded member (78), wherein the shifting shaft (26) is provided with at least a first recess (80), and wherein the spring-loaded member (78) is configured to follow along an inclined surface (82) of the first recess (80) from radially outside the first recess (80) into a bottom portion (84) of the first recess (80).

11. The gear shifting arrangement (8) according to claim 10 and any one of claims 7 - 9, wherein the shifting shaft (26) is provided with a second recess (90) arranged adjacent to the first recess (80), and wherein the spring-loaded member (78) is configured to follow along an inclined surface (92) of the second recess (90) from radially outside the second recess (90) into a bottom portion (94) of the second recess (90).

12. The gear shifting arrangement (8) according to claim 10 or 11, wherein the spring-loaded member (78) comprises a ball member (86) configured to fit into the first recess (80).

13. A vehicle driving assembly (6) for a vehicle (2), wherein the vehicle driving assembly (6) is configured to support at least two drive wheels (4) of the vehicle (2), wherein the vehicle driving assembly (6) comprises an axle beam (10), two drive shafts (12) arranged to drive the drive wheels (4), a gearbox (14), an electric machine (16) configured to drive the two drive shafts (12) via the gearbox (14), and a gear shifting arrangement (8) according to any one of the preceding claims.

14. A vehicle (2) comprising a vehicle driving assembly (6) according to claim 13.
